(19) Europäisches Patentamt
European Patent Office
Office européen des brevets

(11) Veröffentlichungsnummer: **0 287 052 B1**

(12) **EUROPÄISCHE PATENTSCHRIFT**

(45) Veröffentlichungstag der Patentschrift: **02.01.92**

(51) Int. Cl.[5]: **C09D 5/44**

(21) Anmeldenummer: **88105861.4**

(22) Anmeldetag: **13.04.88**

# (54) Verfahren zur Herstellung von Biuretgruppen enthaltenden selbstvernetzenden kationischen Lackbindemitteln.

(30) Priorität: **17.04.87 AT 967/87**

(43) Veröffentlichungstag der Anmeldung:
**19.10.88 Patentblatt 88/42**

(45) Bekanntmachung des Hinweises auf die Patenterteilung:
**02.01.92 Patentblatt 92/01**

(84) Benannte Vertragsstaaten:
**BE CH DE ES FR GB IT LI NL SE**

(56) Entgegenhaltungen:
**EP-A- 0 158 128**
**EP-A- 0 209 857**
**EP-A- 0 214 442**
**US-A- 4 605 690**

(73) Patentinhaber: **VIANOVA KUNSTHARZ AKTIENGESELLSCHAFT**
**Postfach 191 Leechgasse 21**
**A-8011 Graz(AT)**

(72) Erfinder: **Paar, Willibald, Dr.**
**Schanzelgasse 19**
**A-8010 Graz(AT)**

EP 0 287 052 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Biuretgruppen enthaltenden, selbstvernetzenen, nach Protonierung wasserlöslichen Lackbindemitteln auf der Basis von Reaktionsprodukten von blockierte Isocyanatgruppen aufweisenden Aminoalkylierungsprodukten von Phenolen und Epoxidharzen, in welche durch weitere Umsetzung mit gegebenenfalls halbblockierten Diisocyanaten die Biuretgruppen eingeführt werden. Die nach diesem Verfahren hergestellten Produkte sind besonders für die Formulierung hochwertiger Elektrotauchlacke geeignet.

Aus der EP-A2-209 857 sind kationische Lackbindemittel bekannt, die durch einen schematischen Aufbau

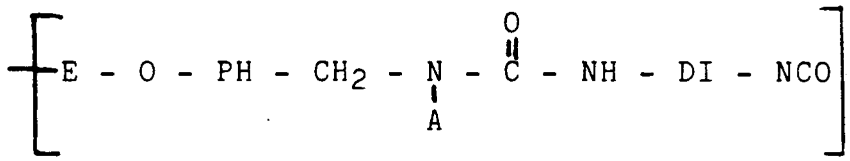

1 oder 2

gekennzeichnet sind, wobei
E - den Rest einer Epoxidverbindung
- PH - den Rest eines Phenols
A - den Rest eines Amins und
- DI - NCO den Rest eines halbblockierten Diisocyanats
darstellt.

Die Produkte sind in überraschend glatter Weise herstellbar und ergeben nach Protonierung wasserverdünnbare Lacke, die gute applikatorische Eigenschaften aufweisen und bereits bei einer Temperatur von ca. 160° C einwandfrei vernetzte Filme ergeben.

Es has sich jedoch gezeigt, daß Lackierungen auf dieser Basis bei den verschiedenen Korrosionsprüfungen, wie Salzsprühtest oder Salzwasser-Wechseltest nicht die, insbesonders von der Kraftfahrzeugindustrie, geforderten Werte erreichen. Weiters soll die Haftfestigkeit auf einer möglichst breiten Palette von PVC-Materialien, wie sie von der Autoindustrie als Unterbodenschutz und Dichtungsmaterial eingesetzt werden, noch verbessert werden.

Es wurde nun gefunden, daß die Kondensate gemäß vorstehenden Aufbaus diese Forderung erfüllen, wenn vor der Umsetzung mit der Epoxidverbindung durch Umsetzung des verbliebenen Wasserstoffatoms an der Harnstoffgruppierung mit weiterem halbblockierten Diisocyanat eine Biuretgruppe eingeführt wird.

Die Erfindung betrifft demgemäß ein Verfahren zur Herstellung von nach Protonierung wasserverdünnbaren, Biuretgruppen aufweisenden, selbstvernetzenden kationischen Lackbindemitteln auf der Basis von blockierte Isocyanatgruppen aufweisenden. Aminoalkylierungsprodukten von Phenolen und gegebenenfalls Epoxidharzen, welches dadurch gekennzeichnet ist, daß man ein Kondensat der Formel

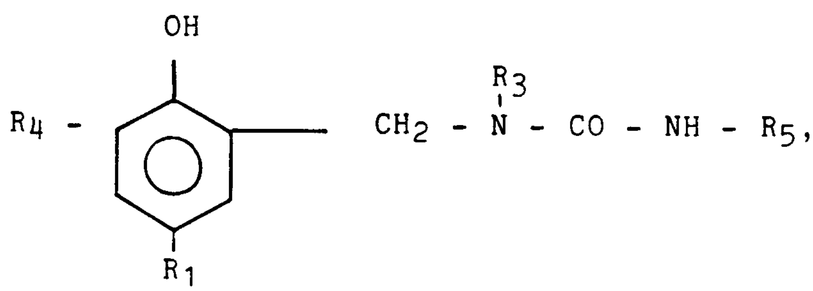

wobei

$R_1$ ein Wasserstoffatom, einen Alkylrest, oder einen der Reste

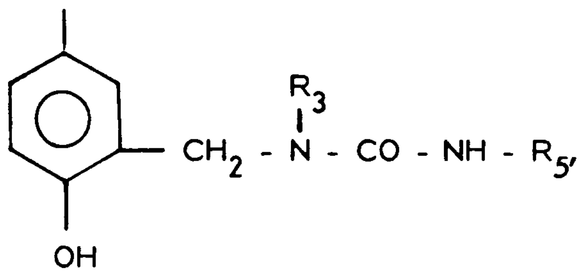

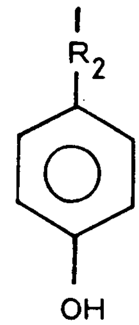

oder

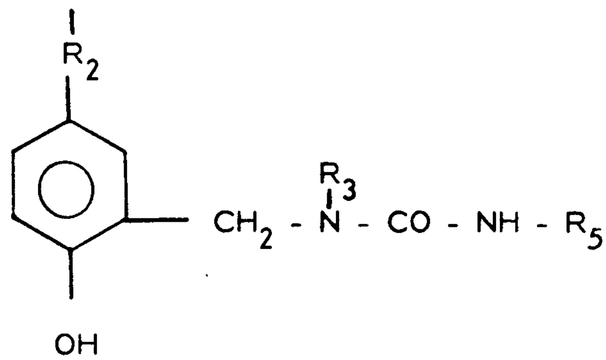

$R_2$ einen Rest $-CH_2-$,

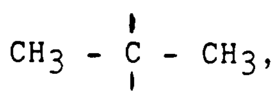

$R_3$ einen Alkyl-, Hydroxyalkyl- oder einen tert.-Aminoalkylrest

$R_4$ ein Wasserstoffatom oder, bei $R_1$ = H ein Wasserstoffatom oder einen Rest $-CH_2-N(R_3)-CO-NH-R_5$ und

$R_5$ den Rest eines mit einer monofunktionellen Verbindung halbblockierten Diisocyanats bedeutet,

mit, bezogen auf die an den Harnstoffgruppierungen befindlichen Wasserstoffatome 0,1 bis 1,0 Mol eines oder mehrerer halbblockierter Diisocyanate umsetzt und gegebenenfalls in einer weiteren Reaktionsstufe die phenolischen Hydroxylgruppen ganz oder teilweise mit Epoxidverbindungen reagiert, wobei die Menge der basischen Gruppen so gewählt wird, daß das Endprodukt eine Aminzahl von mindestens 25 mg KOH/g aufweist.

Die Erfindung betrifft weiters die Verwendung der gemäß diesem Verfahren hergestellten kationischen Bindemittel in wasserverdünnbaren Lacken, insbesonders in Elektrotauchlacken.

Die als Vorprodukte eingesetzten Phenol-Harnstoff-Kondensate sind in der EP-A2- 2 09 857, auf welche als Referenz ausdrücklich verwiesen wird, ausführlich beschrieben. Wie dort beschrieben, kann bei der Herstellung dieser Verbindungen einerseits von Aminoalkylierungsprodukten aus Phenol, primären Amin und Formaldehyd ausgegangen werden und diese an der NH-Gruppe mit dem halbblockierten Diisocyanat reagiert werden (Methode A). Andererseits kann die Kondensation des Phenols auch mit dem Umsetzungsprodukt aus dem halbblockierten Diisocyanat und dem primären Amin und Formaldehyd erfolgen (Methode B).

Bezüglich der Herstellung von Aminoalkylierungsprodukten von Phenolen, welche nach entsprechender Modifikation ebenfalls aus Ausgangsprodukte für die vorliegende Erfindung in Frage kommen, wird auch auf die EP-A1-158 128 verwiesen.

Eine für die vorliegende Erfindung bevorzugte Gruppe von Kondensationsverbindungen hat als Ausgangsmaterialien zweikernige Phenole vom Typ der Diphenylolalkane, wie das Bisphenol A (4,4'-Diphenylolpropan) oder das Bisphenol F (4,4'-Diphenylolmethan). Der Formaldehyd kommt dabei vorzugsweise in Form von Paraformaldehyd (mit einem $CH_2O$-Gehält von ca. 85 bis ca. 100 %) zum Einsatz. Als primäre aliphatische Amine werden neben primären Monoaminen, wie Butylamin, seinen Isomeren und höheren Homologen und/oder primären Alkanolaminen, wie Monoethanolamin und dessen Homologe, besonders bevorzugt primär-tertiäre Diamine, insbesonders N,N-Dialkylaminoalkylendiamine, wie N,N-Dimethylaminoethylamin oder N,N-Diethylaminopropylamin eingesetzt.

Anteilweise können auch diprimäre Amine wie Ethylendiamin und Homologe eingesetzt werden.

In einer vorteilhaften Ausführungsform erfolgt die Kondensation in der Weise, daß man die Komponenten in Gegenwart eines mit Wasser ein Azeotrop bildenden Lösemittels, wie Toluol oder einem entsprechenden Benzinkohlenwasserstoff, unter Berücksichtigung einer eventuellen Exothermie, auf die für die azeotrope Entfernung des Reaktionswassers notwendige Temperatur erwärmt. Nach Abtrennung der berechneten Wassermenge wird das Kreislaufmittel unter Vakuum entfernt und das Reaktionsprodukt in einem aprotischen Lösemittel gelöst.

Das so erhaltene Reaktionsprodukt, welches pro Molekül durchschnittlich mindestens eine sekundäre Aminogruppe aufweist, wird in der nächsten Stufe bei 30 bis 50 °C mit halbblockierten Diisocyanaten umgesetzt, wobei für jede NH-Gruppe 1,1 bis 2,0 Mol der Isocyanatverbindung zum Einsatz kommt. Durch die Umsetzung der NH-Gruppen mit den halbblockkierten Diisocyanaten werden die Harnstoffgruppierungen, wie auch die erwünschten Biuretgruppen gebildet. Gegebenenfalls vorhandene Hydroxylgruppen werden dabei aufgrund der bevorzugten Reaktion zwischen NH- und NCO-Gruppen nur in vernachlässigbarem Umfang in die Reaktion einbezogen. Die Reaktion mit den halbblockierten Diisocyanaten kann bei Anwendung der Methode (A) zur Herstellung der Phenol-Harnstoff-Kondensate gemeinsam oder auch stufenweise, gegebenenfalls mit verschiedenen Isocyanatverbindungen oder auch mit Mischungen verschiedener Isocyanatverbindungen erfolgen. Bei Anwendung der Methode (B) erfolgt die Biuretbildung selbstverständlich erst nach der Umsetzung des Phenols mit Formaldehyd und dem Umsetzungsprodukt aus einem halbblockierten Diisocyanat, und dem primären Amin.

Die halbblockierten Diisocyanate werden in bekannter Weise hergestellt, wobei vorzugsweise solche Diisocyanate, deren NCO-Gruppen verschiedene Reaktivität aufweisen, wie Toluylendiisocyanat oder Isophorondiisocyanat, verwendet werden.

Als Blockierungsmittel dienen bevorzugt aliphatische Monoalkohole, welche - gegebenenfalls in Gegenwart der üblichen Katalysatoren - unter den Einbrennbedingungen abgespalten werden. Andere Blockierungsmittel sind beispielsweise Phenole, Oxime, Amine, ungesättigte Alkohole, Caprolactam, etc.

Gegebenenfalls können in einer letzten Verfahrensstufe die phenolischen Hydroxylgruppen durch Veretherung mit Epoxidverbindungen, vorzugsweise mit Monoepoxidverbindungen, wie Glycidylester, insbesonders solchen der sogenannten KOCH-Säuren, oder Glycidylethern wie 2-Ethylhexylglycidylether, reagiert werden. Beim Einsatz von Polyepoxidverbindungen ist die hohe Funktionalität der Systeme zu beachten. Die Umsetzung erfolgt bei 80 bis 130 °C bis zu einem Epoxidwert von praktisch 0. Aufgrund der im Molekül vorhandenen basischen Gruppen ist eine zusätzliche Katalysierung normalerweise nicht notwendig.

Bei der Formulierung der Ansätze ist darauf zu achten, daß die Endprodukte die erforderliche Basizität aufweisen, um eine ausreichende Stabilität der wäßrigen Lösung des Bindemittels zu gewährleisten. Die Einführung dieser vorzugsweise auf tertiären Aminogruppen beruhenden Basizität, entsprechend einer Aminzahl von mindestens 25 mg KOH/g, kann einerseits durch Verwendung von primär-tertiären Diaminen bei der Herstellung von Kondensationsverbindung oder andererseits durch Einsatz von entsprechenden Aminen als Blockierungsmittel für die Halbblockierung der Diisocyanate oder durch entsprechende Rohstoffauswahl für die NH-Gruppen tragende Komponente erfolgen. Zur Erzielung der Wasserverdünnbarkeit werden die basischen Gruppen des Reaktionsproduktes mit Säuren, vorzugsweise mit Ameisensäure, Essigsäure oder Milsäure partiell oder vollständig neutralisiert. Für eine praxisgerechte Verdünnbarkeit genügt dafür üblicherweise eine Neutralisation von 20 - 60 % der basischen Gruppen oder eine Menge von ca. 20 bis 60 Millimol Säure pro 100 g Festharz. Die Bindemittel werden dann mit deionisiertem Wasser auf die gewünschte Konzentration verdünnt; gegebenenfalls werden wie vor der Neutralisation oder vor der Verdünnung oder im teilverdünnten Zustand mit Vernetzungskatalysatoren, Pigmenten, Füllstoffen und anderen Zusatzstoffen zu pigmentierten Lacken verarbeitet.

Die Formulierung solcher Lacke sowie deren Verarbeitung im Elektrotauchlackierverfahren sind dem Fachmann bekannt und in der Literatur beschrieben. Die Härtung der abgeschiedenen Überzüge erfolgt beim Einsatz als. Grundierung bei Temperaturen zwischen 150 und 170 °C während 10 bis 30 Minuten. Soferne die Bindemittel nicht in ausreichendem Maße selbstvernetzende Strukturen aufweisen, können auch zusätzliche Vernetzungsmittel, wie blockierte Isocyanate oder Aminoharze bzw. Phenolharze, mitverwendet werden. Die Produkte können bei entsprechender Formulierung auch durch andere Verfahren, wie Tauchen,

Walzen oder Spritzen aufgebracht werden. Gegebenenfalls können die Bindemittel auch in organischen Lösungsmitteln verarbeitet werden.

Die nachstehenden Beispiele erläutern die Erfindung, ohne sie in ihrem Umfang zu beschränken. Es wird nochmals darauf hingewiesen, daß viele der in der EP-A2-209 857 bzw. der EP-A1- 158 128 angegebenen Produkte unter Berücksichtigung der Funktionalität, vorteilhaft als Zwischenprodukte eingesetzt werden können.

Alle Angaben in Teilen oder Prozenten beziehen sich, soferne nichts anderers angegeben ist, aus Gewichtseinheiten. Bei Angaben der molaren Verhältnisse sind die Teile Gramm.

Beispiel 1:

In einem geeigneten Reaktionsgefäß werden 228 Tle (1 Mol) Bisphenol A mit 260 Tlen (2 Mol) Diethylaminopropylamin und 66 Tlen (2 Mol) Paraformaldehyd (91 % $CH_2O$) bei 40 bis 60 °C unter gelegentlicher Kühlung 30 Minuten reagiert. Nach Zugabe von 675 Tlen Toluol wird auf Destillationstemperatur erhitzt und das Reaktionswasser azotrop abgetrennt. Sobald die errechnete Wassermenge abgetrennt ist, wird der Ansatz auf 30 °C gekühlt und unter Kühlung 1064 Tle (3,5 Mol) eines mit 2-Ethylhexanol halbblockkierten Toluylendiisocyanates gleichmäßig innerhalb 45 Minuten zugegeben. Die Temperatur von 70 °C wird bis zum Erreichen eines NCO-Wertes von praktisch 0 gehalten. Das Toluol wird dann unter Vakuum entfernt und das Produkt in 675 Tlen Diethylenglykoldimethylether gelöst.

2251 Tle dieser Lösung werden mit einer Lösung von 190 Tlen eines Epoxidharzes auf Basis von Bisphenol A (Epoxidäquivalentgewicht ca. 190) und 250 Tlen (1 Mol) eines Glycidylesters einer gesättigten, tertiären $C_9$ -$C_{11}$- Monocarbonsäure in 389 Tlen Diethylenglykoldimethylether versetzt und bei 95 bis 100 °C bis zu einem Epoxidwert von 0 umgesetzt. Das Produkt ist nach Zusatz von 40 Millimol Ameisensäure pro 100 g Festharz in einen 50%igen wäßrigen Klarlack überführbar. Der Klarlack wird nach Zugabe von 0,8 % (berechnet als Metall) eines Dibutylzinndiacetats kathodisch auf einem Stahlblech abgeschieden und bei 140 °C 25 Minuten eingebrannt. Es resultiert ein gehärteter Film mit einer Beständigkeit gegenüber 300 MEK-Doppelhüben.

Prüfung als pigmentierter Lack:

Aus dem Bindemittel wurde in bekannter Weise ein Lack hergestellt, wobei 83 Tle einer Pigmentpaste, welche pro 100 Tlen Festharz, 1 Tl Farbruß, 12 Tle basisches Bleisilikat und 147 Tle Titandioxid enthält, mit weiteren 70 Tlen Festharz des Beispiels aufgelackt, neutralisiert und mit deionisiertem Wasser auf einen Feststoffgehalt von 17 % verdünnt wurden. Der Lack wurde auf als Kathode geschalteten zinkphosphatierten Stahlblechen abgeschieden und 25 Minuten bei 150 °C gehärtet. Bei einer Trockenfilmstärke von 22 $\mu$m zeigen die Bleche im Salzsprühtest nach ASTM-B-117-64 nach 1600 Stunden einen Angriff am Kreuzschnitt von max. 2 mm. Beim Klima-Wecheltest (1 Runde = 4 Stunden Salzsprühtest + 4 Stunden Trockenlagerung + 16 Stunden Feuchtraumtest) zeigen die Bleche nach 40 Runden eine Unterrostung von weniger als 2 mm.

Beispiel 2:

In einem geeigneten Reaktionsgefäß werden 260 Tle (2 Mol) Diethylaminopropylamin in Gegenwart von 675 Tlen Toluol bei 30 bis 50 °C unter Kühlung mit 608 Tlen (2 Mol) eines mit 2-Ethylhexanol halbblockierten Toluylendiisocyanats umgesetzt. Nach Ende der Zugabe sind alle Isocyanatgruppen verbraucht.

Der Ansatz wird dann mit 228 Tlen (1 Mol) Bisphenol A und 66 Tlen (2 Mol) Paraformaldehyd, 91%ig, versetzt. Der Ansatz wird 1 Stunde bei 75 bis 80 °C gehalten und anschließend bei steigender Temperatur das Reaktionswasser azeotrop entfernt. Anschließend wird das Toluol im Vakuum entfernt und durch die gleiche Menge Diethylenglykoldimethylether ersetzt.

Die Biuretbildung erfolgt durch Zugabe von weiteren 456 Tlen (1,5 Mol) des oben angegebenen halbblockierten Diisocyanats bei 70 bis 80 °C. Nach 2 Stunden Reaktionszeit bei dieser Temperatur ist der Anteil an freien Isocyanatgruppen auf 0 gesunken.

Das Produkt wird, wie im Beispiel 1 beschrieben, mit den Epoxidverbindungen weiter reagiert und lacktechnisch geprüft. Man erhält bei allen Prüfungen vergleichbare Ergebnisse.

**Patentansprüche**

1. Verfahren zur Herstellung von nach Protonierung wasserverdünnbaren Biuretgruppen aufweisenden, selbstvernetzenden kationischen Lackbindemitteln auf der Basis von blockierte Isocyanatgruppen aufweisenden Aminoalkylierungsprodukten von Phenolen und Epoxidharzen, dadurch gekennzeichnet, daß

man ein Kondensat der Formel

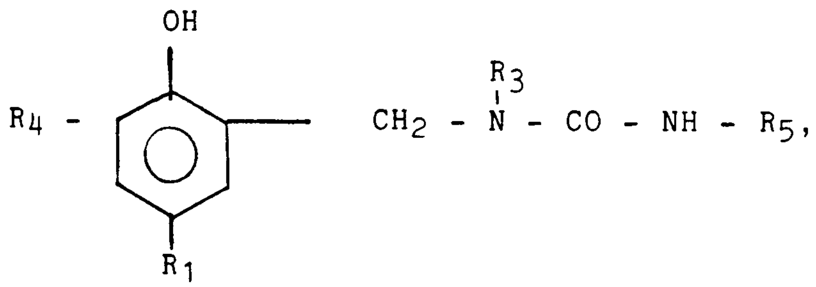

wobei

$R_1$ ein Wasserstoffatom, einen Alkylrest, einen der Reste

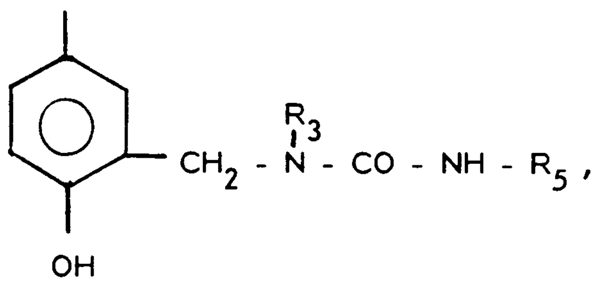

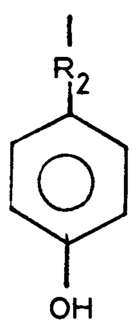

oder

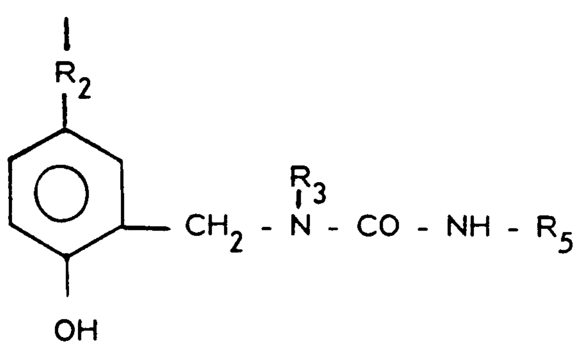

$R_2$ einen Rest $-CH_2-$,

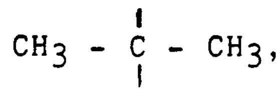

$R_3$ einen Alkyl-, Hydroxyalkyl- oder einen tert.-Aminoalkylrest

$R_4$ ein Wasserstoffatom oder, bei $R_1$ = H ein Wasserstoffatom oder einen Rest $-CH_2-N(R_3)-CO-NH-R_5$ und

$R_5$ den Rest eines mit einer monofunktionellen Verbindung halbblockierten Diisocyanats bedeutet,

mit, bezogen auf die an den Harnstoffgruppierungen befindlichen Wasserstoffatome 0,1 bis 1,0 Mol mindestens eines halbblockierten Diisocyanates unter Bildung von Biuretgruppen umsetzt und gegebenenfalls in einer weiteren Reaktionsstufe die phenolischen Hydroxylgruppen ganz oder teilweise mit Epoxidverbindungen reagiert, wobei die Menge der basischen Gruppen so gewählt wird, daß das Endprodukt eine Aminzahl von mindestens 25 mg KOH/g aufweist.

2. Verfahren nach Anspruch 1, dadurch gekennzeichnet, daß man das substituierte Harnstoffgruppen tragende Phenolkondensat durch Umsetzung eines Aminoalkylierungsproduktes aus einem Phenol, einem primären Amin und Formaldehyd mit einem halbblockierten Diisocyanat herstellt.

3. Verfahren nach Anspruch 1, dadurch gekennzeichnet, daß man das substituierte Harnstoffgruppen tragende Phenolkondensat durch Kondensation eines Umsetzungsproduktes aus einem primären Amin und eines halbblockierten Diisocyanates mit einem Phenol und Formaldehyd herstellt.

4. Verfahren nach Anspruch 1, dadurch gekennzeichnet, daß man die Ansätze so formuliert, daß durch das Kondensationsvorprodukt und/oder die Verknüpfungsreaktion und/oder durch das für die Halbblokkierung der Diisocyanate eingesetzte tert. Alkanolamin tert. Aminogruppen in einer Menge ensprechend einer Aminzahl von mindestens 25 mg KOH/g eingeführt werden.

5. Verwendung der gemäß den Ansprüchen 1 und 2 hergestellten Lackbindemittel zur Formulierung von kathodisch abscheidbaren Lacken.

**Claims**

1. Process for the production of self-crosslinking cationic paint binders which are water-dilutable after protonation and have biuret groups, on the basis of aminoalkylation products of phenols and epoxide resins, said aminoalkylation products having blocked isocyanate groups, characterised in that a condensate of the formula

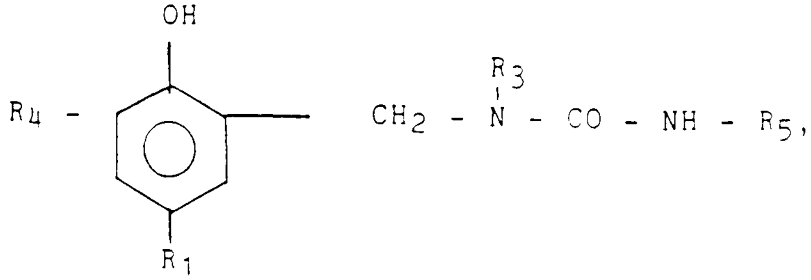

where

$R_1$ is a hydrogen atom, an alkyl radical or one of the radicals

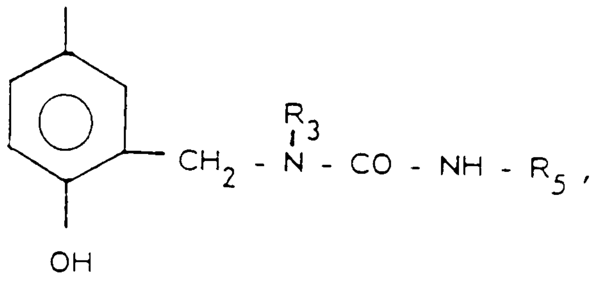

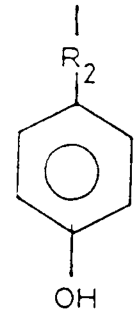

or

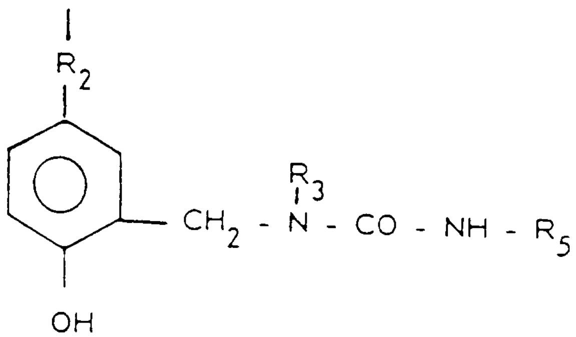

$R_2$ is a $-CH_2-$ or

$$CH_3 - \overset{|}{\underset{|}{C}} - CH_3 \text{ radical,}$$

$R_3$ is an alkyl radical, hydroxyalkyl radical or tert.-aminoalkyl radical,
$R_4$ is a hydrogen atom or, if $R_1$ - H, a hydrogen atom or a $-CH_2-N(R_3)-CO-NH-R_5$ radical and
$R_5$ is the radical of a diisocyanate half-blocked with a monofunctional compound,
is reacted with, relative to the hydrogen atoms located on the urea groupings, 0.1 to 1.0 mol of at least one half-blocked diisocyanate to form biuret groups and, if desired, the phenolic hydroxyl groups are reacted in a further reaction stage wholly or partially with epoxide compounds, the quantity of the basic groups being selected such that the end product has an amine number of at least 25 mg of KOH/g.

**2.** Process according to Claim 1, characterised in that the phenolic condensate carrying substituted urea groups is prepared by reacting an amino alkylation product obtained from a phenol, a primary amine and formaldehyde with a half-blocked diisocyanate.

**3.** Process according to Claim 1, characterised in that the phenolic condensate carrying substituted urea groups is prepared by condensing a reaction product obtained from a primary amine and a half-blocked diisocyanate with a phenol and formaldehyde.

**4.** Process according to Claim 1, characterised in that the batches are formulated such that, by means of the condensation intermediate and/or the linking reaction and/or the tertiary alkanolamine used for the half-blocking of the diisocyanates, tertiary amino groups in a quantity corresponding to an amine number of at least 25 mg of KOH/g are introduced.

**5.** Use of the paint binders produced according to Claims 1 and 2 for the formulation of cathodically depositable paints.

**Revendications**

**1.** Procédé de préparation de liants cationiques pour peintures, diluables à l'eau après protonation, présentant des groupes biuret, autoréticulants, à base de produits d'aminoalkylation, présentant des groupes isocyanate bloqués, de phénols et de résines époxy, caractérisé en ce que l'on fait réagir un condensat de formule

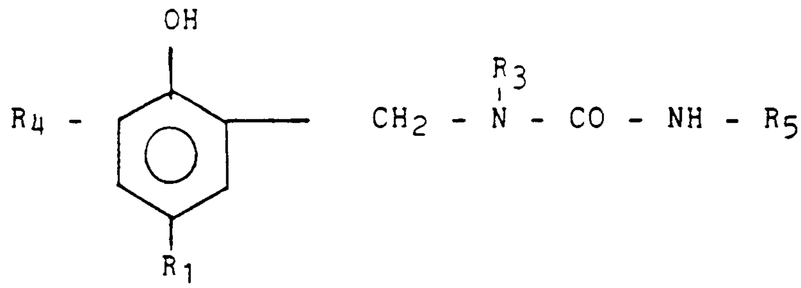

dans laquelle
$R_1$ représente un atome d'hydrogène, un reste alkyle ou l'un des restes

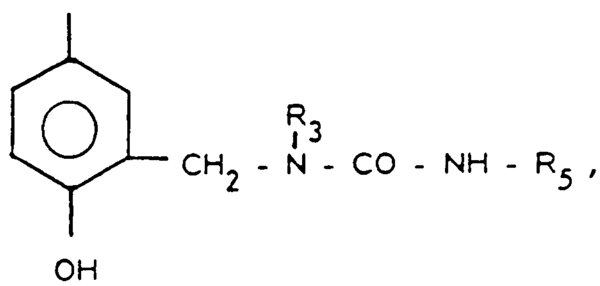

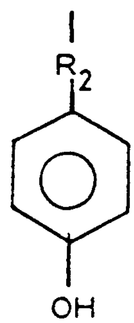

ou

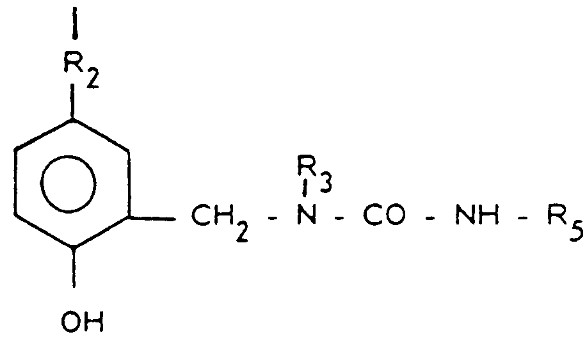

$R_2$ représente un reste $-CH_2-$,

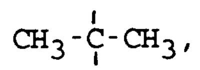

$R_3$ représente un reste alkyle, hydroxyalkyle ou un reste tert.aminoalkyle,
$R_4$ représente un atome d'hydrogène ou, quand $R_1$ = H, un atome d'hydrogène ou un reste $-CH_2-N-(R_3)-CO-NH-R_5$ et
$R_5$ représente le reste d'un diisocyanate semibloqué avec un composé monofonctionnel,
avec, par rapport aux atomes d'hydrogène situés sur les groupes urée, 0,1 à 1,0 mole d'au moins un diisocyanate semibloqué avec formation de groupes biuret et éventuellement dans une autre étape réactionnelle on fait réagir les groupes hydroxyle phénoliques totalement ou partiellement avec des composés époxydés, en choisissant la quantité de groupes basiques de telle manière que le produit final présente un indice d'amine d'au moins 25 mg de KOH/g.

**2.** Procédé selon la revendication 1, caractérisé en ce que l'on prépare le condensat phénolique portant des groupes urée substitués par réaction d'un produit d'aminoalkylation d'un phénol, d'une amine primaire et de formaldéhyde avec un diisocyanate semibloqué.

**3.** Procédé selon la revendication 1, caractérisé en ce que l'on prépare le condensat phénolique portant des groupes urée substitués par condensation d'un produit de réaction d'une amine primaire et d'un diisocyanate semibloqué avec un phénol et le formaldéhyde.

**4.** Procédé selon la revendication 1, caractérisé en ce que l'on formule les charges de manière à introduire des groupes tert.amino en une quantité correspondant à un indice d'amine d'au moins 25 mg de KOH/g par l'intermédiaire du produit intermédiaire de condensation et/ou de la réaction de liaison et/ou par l'intermédiaire de la tert.alcanolamine utilisée pour le semiblocage des diisocyanates.

**5.** Utilisation des liants pour peintures préparés selon les revendications 1 et 2 pour la formulation de peintures précipitables à la cathode.